# EUROPEAN PATENT APPLICATION

(11) **EP 1 637 979 A1**
(43) Date of publication of application: **22.03.2006**
(21) Application number: 04104465.2
(22) Date of filing: 15.09.2004
(51) Int. Cl.: G06F 3/033

(54) **User interface having viewing area with non-transparent and semi-transparent regions**

(71) Applicant: Research In Motion Limited, Waterloo, Ontario N2L 3W8 (CA)
(72) Inventor: Bells, Matthew, N2L 6M2, Waterloo, (CA)
(74) Representative: Rickard, David John

(57) **Abstract**

Method and device for displaying, in a graphical user interface having overlapping viewing areas, a foreground viewing area having foreground viewing area content over a background viewing area having background viewing area content, including displaying the foreground viewing area with a non-transparent region that obscures any part of the background viewing area overlapped thereby and a semi-transparent region through which background viewing area content overlapped thereby can be at least partially viewed.

## Description

The present application relates to user interfaces and, in particular, to the display of overlapping display areas windows on a user interface of an electronic device.

### BACKGROUND INFORMATION

A graphical user interface (GUI) on a mobile electronic device, or other electronic device, often includes overlapping viewing areas that are commonly referred to as windows. In windowing systems, one window or viewing area will be in the foreground with one or more other concurrently displayed windows in the background. In some GUI systems, a top or foreground window that overlays a background widow is rendered such that the overlapped portions of the background window appear to be semi-transparent such that in addition to the content of the foreground window, at least some content in the background window can be viewed through the foreground window. Transparent or translucent windows can offer increased visual appeal in some applications, and may also allow more information to be displayed to the user.

However, displaying semi-transparent windows can use a lot of computing resources such as processor power and memory. In existing semi-transparent window solutions, each time a change occurs in either the top or background window, both windows are fully represented, either through bitmap buffers or by a complete redrawing.

Computing resources tend to be limited in mobile electronic devices, and accordingly, there is a need for a system and method for displaying overlapping windows in which at least some of the visual appeal offered by semi-transparency can be achieved without extensive consumption of computing resources.

### BRIEF SUMMARY

The present application describes methods, devices, and computer program products in which the border region of an overlaying window is displayed as a translucent or semi-transparent border such that content in an underlying viewing area can be at least partially seen through the border region, and the interior region is displayed as non-transparent.

In one aspect, the present application provides a method for displaying, in a graphical user interface having overlapping viewing areas, a foreground viewing area having foreground viewing area content over a background viewing area having background viewing area content. The method includes displaying the foreground viewing area with a non-transparent region that obscures any part of the background viewing area overlapped thereby and a semi-transparent region through which background viewing area content overlapped thereby can be at least partially viewed.

In another aspect, the present application provides a mobile electronic device that includes a display screen for displaying a user interface having overlapping windows, memory and a processor connected to the memory and to the display screen for controlling operation of the display screen. A user interface manager is associated with the processor for displaying as part of the user interface a foreground window having a non-transparent region that obscures any part of a background viewing area of the user interface overlapped by the non-transparent region; and a semi-transparent region through which content of the background viewing area overlapped by the semi-transparent region can be at least partially viewed.

In yet another aspect, the present application provides a computer program product having a computer-readable medium tangibly embodying computer executable instructions for displaying, in a graphical user interface having overlapping viewing areas, a foreground viewing area having foreground viewing area content over a background viewing area having background viewing area content. The computer executable instructions include computer executable instructions for displaying the foreground viewing area with a non-transparent region that obscures any part of the background viewing area overlapped thereby and a semi-transparent region through which background viewing area content overlapped thereby can be at least partially viewed.

### BRIEF DESCRIPTION OF THE DRAWINGS

Embodiments will now be described, by way of example only, with reference to the attached Figures, wherein:

Figure 1 is a block diagram of a mobile electronic device and a communications system to which embodiments may be applied;

Figure 2 shows an example of a first graphical user interface that can be used with the mobile electronic device of Figure 1;

Figure 3 shows an example of a second graphical user interface that can be used with the mobile electronic device of Figure 1;

Figure 4 shows an example of a third graphical user interface that can be used with the mobile electronic device of Figure 1;

Figure 5 is a block diagram illustrating a process for displaying a new overlying window on a graphical user interface of the device of Figure 1;

Figure 6 is a block diagram illustrating a process for updating an overlying window on a graphical user interface of the device of Figure 1; and

Figure 7 is a block diagram illustrating a process for updating an background window on a graphical user interface of the device of Figure 1.

Like reference numerals are used throughout the Figures to denote similar elements and features.

### DETAILED DESCRIPTION

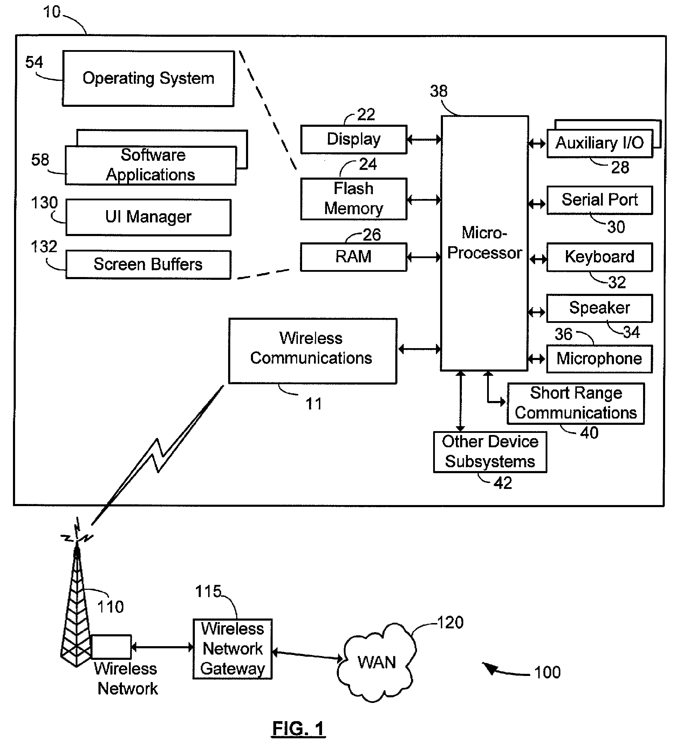

Referring first to Figure 1, there is a block diagram of a communication system 100 and mobile electronic device 10 to which example embodiments of the present application may be applied. The communication system 100 includes mobile electronic devices 10 (only one of which is shown in Figure 1), a wireless network 110 for communicating with the mobile electronic devices 10, and a wireless network gateway 115 for interfacing the wireless network 110 with a Wide Area Network (WAN) 120. The WAN 120 may connect the wireless network gateway 115 with other networks, and the WAN 120 can in various embodiments include the Internet, a direct connection, a local area network (LAN), a wireless communication link, and any combinations thereof.

In the embodiment of Figure 1, the mobile electronic device 10 is a handheld two-way mobile communication device 10 having at least data and possibly also voice communication capabilities. In an example embodiment, the device has the capability to communicate with other computer systems on the Internet. In various embodiments, mobile electronic devices 10 includes data communication devices, multiple-mode communication devices configured for both data and voice communication, mobile telephones, mobile communication devices, PDAs enabled for wireless communications, 1-way or 2-way pagers, wireless modems operating in conjunction with computer systems, and any type of mobile wireless communication devices. In the presently described embodiment, each of the mobile electronic devices 10 is configured to operate within the wireless network 110. It should be appreciated however that the present application is in no way limited to these example types of devices and may be implemented in other devices with displays. Example embodiments may also be applied to non-wireless enabled devices.

The device 10 includes a wireless communication subsystem 11 for two-way communications with wireless network 110. The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28 (which may include a thumb-wheel, for example), serial port 30 (which may include a USB port, for example), keyboard or keypad 32, speaker 34, microphone 36, a short-range communications subsystem 40, and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Software applications 58 may include a wide range of applications, including an address book application, a messaging application, a calendar application, and/or a notepad application. Each software application 58 may include layout information defining the placement of particular fields in the user interface for the software application 58, such as text fields, input fields, etc. Those skilled in the art will appreciate that the operating system 54, specific device applications 58, or parts thereof, may be temporarily loaded into a volatile store such as RAM 26. It is contemplated that received communication signals may also be stored to RAM 26.

The microprocessor 38, in addition to its operating system functions, enables execution of software applications 58 on the device. A predetermined set of applications 58 which control basic device operations, including at least data and voice communication applications for example, will normally be installed on the device 10 during manufacture. Further applications may also be loaded onto the device 10 through the network 110, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

The serial port 30 in Fig. 1 could be a USB type port implemented in a personal digital assistant (PDA)-type communication device for which synchronization with a user's desktop computer (not shown) may be desirable. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices.

Wireless mobile network 110 is, in an example embodiment, a wireless packet data network, (e.g. Mobitex™ or DataTAC™), which provides radio coverage to mobile electronic devices 10, although it could be any other types of wireless networks. Wireless mobile network 110 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

The individual software applications 58 or the operating system 54 may include a user interface (UI) manager, indicated by reference 130. The UI manager 130 130 interacts with software applications 58 and/or operating system 54 and provides a framework for and management of the graphical user interface as displayed on a display 22 of the device. One or more screen buffers 132 may be used in rendering the images displayed on display 22.

Figures 2-4 show examples of three graphical user interface (GUI) configurations which may be displayed on a display 22 of device 10. In each of the GUI configurations, overlapping viewing areas or windows are used to display information to users. Figure 2 shows a GUI 60A that includes a background viewing area or window 62 and a foreground viewing area window 64 which overlays the background window 62. The foreground window includes a border region 66, which surrounds an interior region 68. The interior region 68 includes content such as textual and graphic elements 70, along with background padding 72 that fills in the areas of interior region 68 from which content such as graphic and textual elements 70 are absent. By way of non-limiting example, in GUI 60A of Figure 2, the border region 66 is a 3-pixel wide region that extends about the entire perimeter of interior region 68, with the outer and inner pixels being white and the middle of the three pixel width being black - however, the border region could take numerous other forms. In the GUI 60A of Figure 2, any area of the background window 62 overlapped by foreground window 64 are obscured from view. Non-transparent overlapping windows similar to those used in GUI 60A are known in the art.

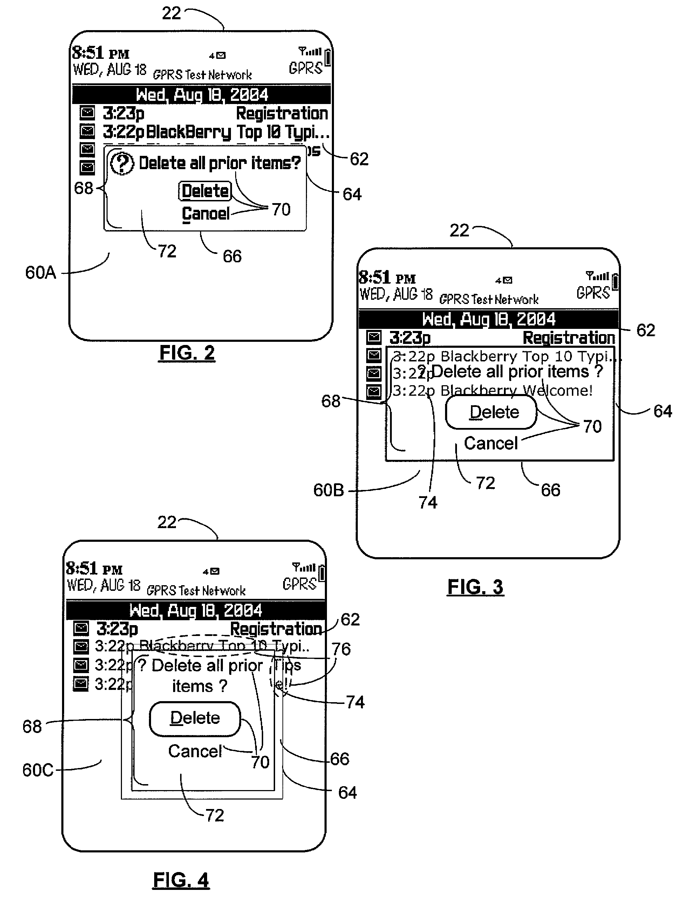

Figure 3 shows a GUI 60B that, similar to GUI 60A, includes a background window 62 and an overlaying foreground window 64. The foreground window includes a border region 66, which surrounds an interior region 68. The interior region 68 includes content such as textual and graphic elements 70, along with background padding 72 that fills in the areas of interior region 68 from which content such as graphic and textual elements 70 are absent. However, unlike GUI 60A of Figure 2, in GUI 60B the overlying foreground window 64 is semi-transparent in that the content 74, including both textual and graphic elements, of the underlying background window 62 shows partially through the foreground window 64. As can be seen from Figure 3, the content 74 of the background window shows, as a ghost or greyed-out image, through both the border regions and interior regions 66, 68 of the foreground widow 64. The underlying content 74 is partially obscured in the overlap area between the bottom and foreground windows 62, 64, providing a visual indication of the overlap - in the illustrated example, the partial obscurity takes the form of a lighter font and lines for the overlapped portions of background window content 74. Within the interior region 68, the content 74 of the background window 62 is particularly visible through areas that are occupied by the background padding 72. GUIs that have semi-transparent overlying windows similar to GUI 60B shown in Figure 3 are known in the art.

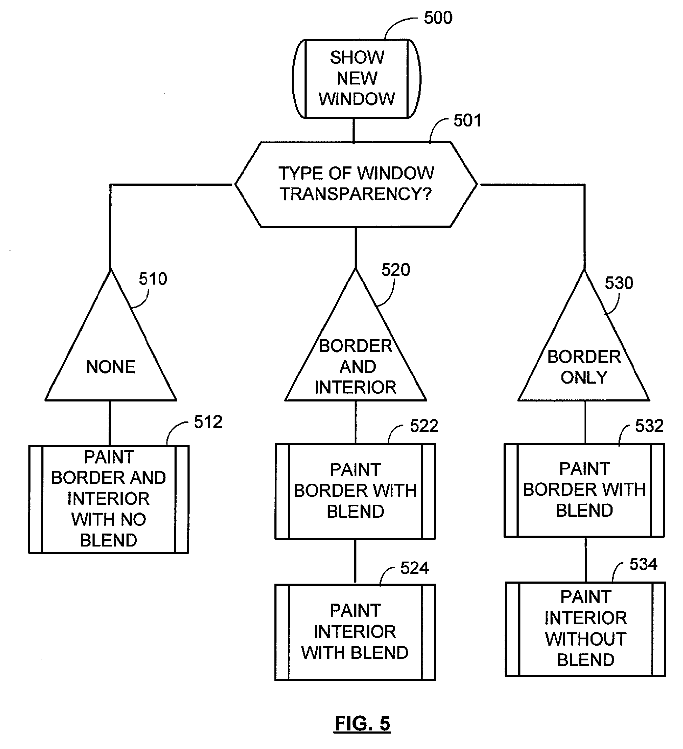

Figure 4 shows a novel GUI 60C that, similar to GUI 60A and GUI 60B, includes a background window 62 and an overlying foreground window 64. The foreground window 64 includes a border region 66, which surrounds an interior region 68. The interior region 68 includes content such as textual and graphic elements 70, along with background padding 72 that fills in the areas of interior region 68 from which content such as graphic and textual elements 70 are absent. GUI 60C is somewhat of a hybrid of GUI 60A and GUI 60B in that it includes a semi-transparent or translucent region through which the underlying content 74 of the background window 62 can be seen, and also includes a region that completely blocks out the underlying content 74 of the background window. More particularly, interior region 68 of the foreground window 64 of GUI 60C completely blocks the content of the background window that is overlaid by interior region 68, whereas border region 66 of GUI 60C is semi-transparent in that the content 74 of background window 62 that underlies the border region 66 is partially visible, as a ghost or greyed-out image, through border region 66. In the illustrated example, the border region 66 has a shadow effect in that the intensity of the border decreases outward from the interior region, giving border region 66 of GUI 60C a fading out appearance. The semi-transparent nature of border region 66 is highlighted by dashed loop 76 where it will be observed that the text of underlying content 74 can be seen through the "shadow" of border region 66.

Thus, in GUI 60C, the border and interior regions 66, 68 of the foreground window 64 are categorized differently, with the border region being treated as semi-transparent and the interior region being treated as non-transparent. Rendering the GUI 60C of Figure 4 will generally require less computing resources than rendering the GUI 60B of Figure 3. Although rendering GUI 60C of Figure 4 will generally require more computing resources than rendering the GUI 60A of Figure 2, the GUI configuration of Figure 4, namely a GUI in which the border region is semi-transparent, offers more flexibility and visual appeal than a non-transparent border. For example, a transparent border region can facilitate: windows with rounded corners; a tabbed folder look with titles as part of the border region; and window borders with a shadow or glow effect, among other effects.

An overview of different GUI's having been provided, the operation of the device 10 and methods for rendering the GUI's will now be described. In at least one example embodiment, the device 10 is configured so that it can display an overlying window using the configuration of either GUI 60A, GUI 60B or GUI 60C, depending on instructions received from software applications 58. In this respect, Figure 5 is a block diagram illustrating a show new window process 500 implemented by UI manager 130 when a software application calls for a new foreground window 64 to be displayed on display 22 on which one or more background windows 62 are already shown. In show new window process 500, as indicated by process step 501, a determination is made as to what type of transparency level the new foreground window has (none; border and interior; or border only) and based on such determination a suitable sub-process for displaying the window is performed. In the case of a foreground window 64 such as that used in GUI 60A of Figure 2, the level of transparency is none and sub-process 510 is performed to display the foreground window. In sub-process 510, as indicated in step 512 both the border region 66 and interior region 68 of the foreground window 64 are painted in an appropriate location on display 22, completely obscuring the area of background window 62 that is overlaid by the foreground window 64. The process for displaying a new foreground window in a non-transparent GUI 60A can be substantially identical to methods used in known non-transparent GUIs.

In the case of a foreground window 64 such as that used in GUI 60B of Figure 3, the level of transparency is such that substantially all of the foreground window, including both its border and interior regions 66, 68, has a degree of transparency and sub-process 520 is performed to display the foreground window 64. In sub-process 520, as indicated in steps 522 and 524, both the border and interior regions 66, 68 are painted as blended regions to create the appearance that content 74 from the background window 62 can be at least partially seen through the foreground window 64. Blending means that display information from the underlying background window 62 is combined or interlaced with information from the overlying foreground window 64 to create a blended display area in which information from both the underlying widow and background window is displayed simultaneously, thereby giving the impression of transparency or semi-transparency. In such a system, the value of each display pixel is determined based on blended information from both the overlying and background windows. Blending may be done on a per pixel basis. For example, if B is a pixel from the background and A the overlapping pixel from the foreground, and C is their blended composition, then C=A*Aalpha+B*(1.0-Aalpha), where Aalpha represents the opacity associated with A from 0.0 to 1,0. In some embodiments, blending may not be used for actual text or graphical content 70 in the foreground window 64.Algorithms for creating blended areas in which content from a background window can be seen through an overlying window, including algorithms that correct for non-linear response curves, are known in the art, and blended regions under the present invention can be implemented using any appropriate blending algorithm

In the case of an foreground window 64 such as that used in GUI 60C of Figure 3, the level of transparency is such that only the border region 66 has a degree of transparency and sub-process 530 is performed to display the overlay foreground window 64. In sub-process 530, as indicated in step 532, only the border region 66 is painted as a blended region to create the appearance that content 74 from the background window 62 can be at least partially seen through the border region 66. As indicated in step 534, the interior region 68 of foreground window 64 is painted based only on the background padding 72 and content 70 of the foreground window 64, such that the interior region 68 of the foreground window 64 completely obscures from view the area of background window 62 that it overlays.

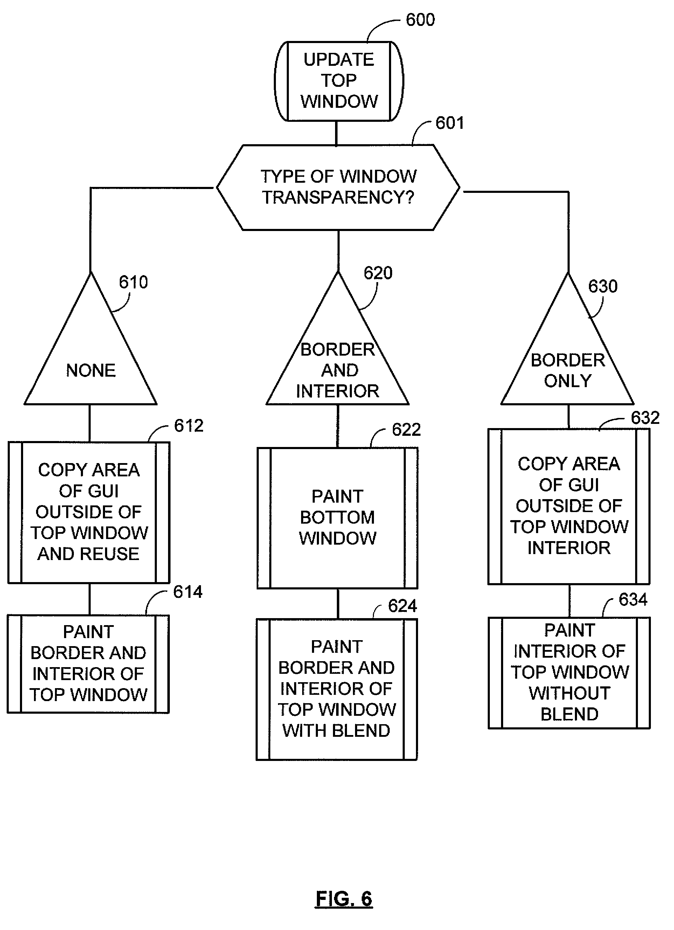

Figure 6 is a block diagram illustrating a foreground window update or change process 600 implemented by UI manager 130 when an overlay foreground window 64 that is already displayed is updated independently of any window that it overlays, for example if a user is scrolling through items displayed in the foreground window 64. In update foreground window process 600, as indicated by process step 601, a determination is made as to what type of transparency level the displayed overlay or foreground window 64 has (none; border and interior; or border only) and based on such determination a suitable sub-process for displaying the window is performed. In the case of a foreground window 64 such as that used in GUI 60A of Figure 2, the level of transparency is none and sub-process 610 is performed to update the foreground window. In sub-process 610, only the border region 66 and interior region 68 of the foreground window 64 shown on display 22 are re-painted (step 614). As indicated in step 612, the area of the GUI 60A that is displayed outside of the border region of the foreground window 64 is copied and reused without requiring that such copied regions be regenerated. The process for updating a foreground window of non-transparent GUI 60A can be substantially identical to methods used in known non-transparent GUIs. In some example embodiments, the border region 66 of the foreground window 66 may be copied and reused together with the non-overlapped area of the background window 62 such that only the interior region of the foreground window 64 needs to be repainted.

In the case of an foreground window 64 such as that used in GUI 60B of Figure 3, the level of transparency is such that substantially all of the foreground window, including both its border and interior regions 66, 68, has a degree of transparency and sub-process 620 is performed to display the foreground window 64. In sub-process 620, as indicated in step 622 the bottom or background window 62 is painted and as indicated in step 624, both the border and interior regions 66, 68 of the updated foreground window are painted as blended regions to create the appearance that content 74 from the background window 62 can be at least partially seen through the foreground window 64. In various embodiments the area of the displayed GUI outside of the foreground window may be copied and reused, or may just be re-painted completely. The process for updating a foreground window of transparent GUI 60B can be substantially identical to methods used in known transparent GUIs.

In the case of an foreground window 64 such as that used in GUI 60C of Figure 3, the level of transparency is that only the border region 66 has a degree of transparency and sub-process 630 is performed to display the overlay foreground window 64. In sub-process 630, as indicated in step 632, the area of the displayed GUI 60C that is outside of the interior region 68 of the foreground window 164 is copied, for example with Java's Graphics.copyRegion facility, so that only a small portion of the user interface's content must be repainted Thus, the blended border region 66 is reused as well as the non-overlapped portions of the background window 62. As indicated in step 634, the interior region 68 of the updated foreground window is painted such that any overlaid areas of GUI 60C are obscured from view. The sub-process 630 thus allows the foreground window 64 to be updated without requiring extensive processing of the display information for the areas of the GUI 60C that are not being updated, while at the same time allowing for visually appealing border region transparency to exist for a relatively low cost of processing resources.

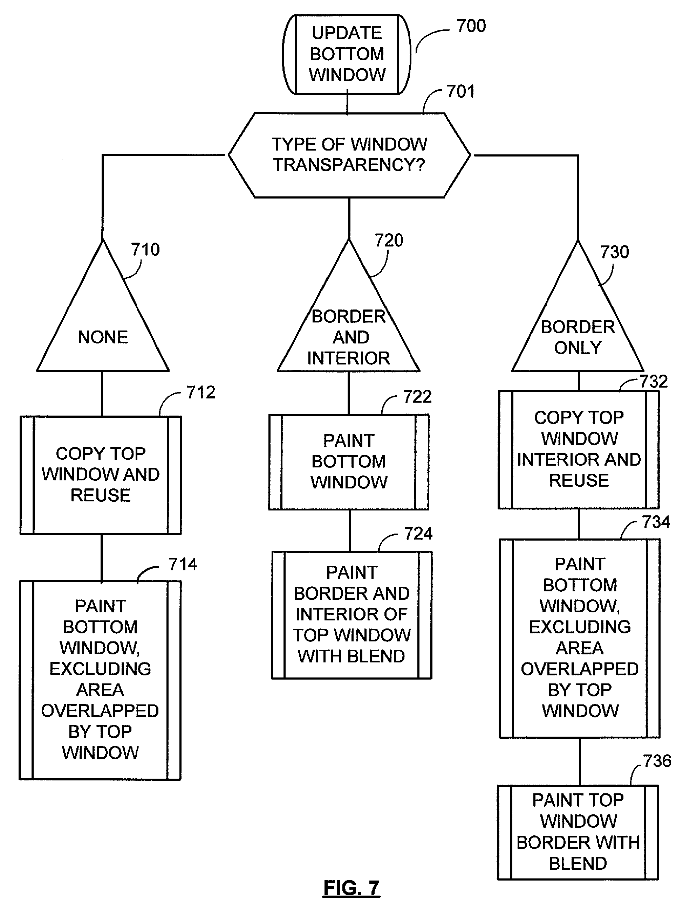

Figure 7 is a block diagram illustrating a background window update process 700 implemented by UI manager 130 when background or background window 62 needs to be updated independently of a foreground window 64 that overlays it. In update background window process 700, as indicated by process step 701, a determination is made as to what type of transparency level the displayed overlay or foreground window 64 has (none; border and interior; or border only) and based on such determination a suitable sub-process for displaying the window is performed. In the case of a foreground window 64 such as that used in GUI 60A of Figure 2, the level of transparency is none and sub-process 710 is performed to update the background window 62. In sub-process 710, the foreground window 64 is copied and reused (step 712), and only the portion of the background window 62 that falls outside of the area overlapped by the foreground window 64 is painted (step 714). The process for updating a background window of non-transparent GUI 60A can be substantially identical to methods used in known non-transparent GUIs.

In the case of a transparent foreground window 64 such as that used in GUI 60B of Figure 3, sub-process 720 is performed to update the background window 62. In sub-process 720, as indicated in step 722, the background window is painted and then, as indicated in step 724, both the border and interior regions 66, 68 of the foreground window are painted as blended regions to create the appearance that content 74 from the background window 62 can be at least partially seen through the foreground window 64 in the overlap area between the two windows. The process for updating a background window of transparent GUI 60B can be substantially identical to methods used in known transparent GUIs.

In the case of a foreground window 64 such as that used in GUI 60C of Figure 3, only the border region 66 has a degree of transparency and sub-process 730 is performed to update the background window 62. In sub-process 730, as indicated in step 732, the interior region 68 of the foreground window 64 is copied, for example with Java's Graphics.copyRegion facility, and reused so that such area does not have to be re-painted. As indicated in step 734, the area of the background window 62 that is not overlapped by foreground window 64 is painted, and as indicated in step 736, the border region 66 of the foreground window 64 is painted to blend with information from the areas that underlie the border region 66, giving the impression that border region 66 is semi-transparent. The sub-process 730 thus allows the background window 62 to be updated without requiring extensive processing of the display information for the interior region 68 of the foreground window or the areas of the GUI 60C that are hidden from view by interior region 68, while at the same time allowing for visually appealing border region transparency to exist for a relatively low cost of processing resources.

Generally, in the processes described above, an image of the graphical user interface will be created in a screen buffer 132, and the resulting image displayed on the display 22. Thus, intermediate steps in the processes are not typically perceived by the viewer, but rather the completed GUI image is what is viewed.

In some example embodiments, the device 10 may not be operable to display all three types of GUI configurations. For example, on some devices only GUI's 60C having a non-transparent interior window region 68 in combination with a transparent or semi-transparent border region 66 may be used.

The above-described embodiments of the present application are intended to be examples only. Alterations, modifications and variations may be effected to the particular embodiments by those skilled in the art without departing from the scope of the application, which is defined by the claims appended hereto.

## Claims

1. A method for displaying, in a graphical user interface having overlapping viewing areas, a foreground viewing area (64) having foreground viewing area content (70) over a background viewing area (62) having background viewing area content (74), the method **characterized by**:
displaying the foreground viewing area (64) with a non-transparent region (68) that obscures any part of the background viewing area (62) overlapped thereby and a semi-transparent region (66) through which background viewing area content (74) overlapped thereby can be at least partially viewed.

2. The method claimed in claim 1, **characterized in that** the non-transparent region is an interior region (68) of the foreground viewing area (64) and the semi-transparent region is a border region (66) that surrounds the interior region (68).

3. The method claimed in claim 2, **characterized in that** the foreground viewing area (64) is a window.

4. The method claimed in claim 2 or claim 3, **characterized by** a step of updating the user interface (60C) to display changes to the foreground viewing area (64) by copying and redisplaying the border region (66) and portions of the background viewing area (62) that are not overlapped by the foreground viewing area (64) and displaying the updated foreground viewing area (64) with an updated non-transparent interior region (68) that obscures any part of the background viewing area (62) overlapped thereby.

5. The method claimed in any one of claims 2 to 4, **characterized by** a step of updating the user interface (60C) to display changes to the background viewing area (64) by displaying the updated background viewing area (62) not overlapped by the foreground viewing area (64), displaying a copy of the non-transparent interior region (68), and displaying the semi-transparent border region (66) updated so that background viewing area content (74) of the updated background viewing area (62) overlapped thereby can be at least partially viewed.

6. The method of any one of claims 2 to 5 **characterized in that** the displayed semi-transparent border region (66) includes a blend of information from both the foreground viewing area (64) and the background viewing area (62).

7. The method of any one of claims 2 to 6 including, prior to the step of displaying the foreground viewing area (64) with the non-transparent region (68) and the semi-transparent region (66):
determining if the foreground viewing area (64) is to be displayed without any transparent regions, and if so, instead of displaying the foreground viewing area with the non-transparent region and the semi-transparent region, displaying the foreground viewing area (64) in its entirety as a non-transparent region that obscures any part of the background viewing area (62) overlapped thereby; and/or
determining if the foreground viewing area (64) is to be displayed with both semi-transparent interior and border regions, and if so, instead of displaying the foreground viewing area (64) with the non-transparent interior region and the semi-transparent border region, displaying the foreground viewing area (64) with both semi-transparent interior and border regions.

8. A mobile electronic device (10), comprising:
a display screen (22) for displaying a user interface having overlapping windows (62, 64);
a memory (24, 26);
a processor (38) connected to the memory (24,26) and to the display screen (22) for controlling operation of the display screen (22);
and **characterized by**:
a user interface manager (130) associated with the processor (38) for displaying as part of the user interface (60C) a foreground window (64) having a non-transparent region (68) that obscures any part of a background viewing area (62) of the user interface (60C) overlapped by the non-transparent region (68); and a semi-transparent region (66) through which content (74) of the background viewing area (62) overlapped by the semi-transparent region (66) can be at least partially viewed.

9. The device claimed in claim 8, **characterized in that** the non-transparent region is an interior region (68) of the foreground window (64) and the semi-transparent region is a border region (66) of the foreground window (64).

10. The device of claim 9, **characterized in that** the user interface manager (130) is configured for updating the user interface (60C) to display changes to the foreground window (64) by reusing the border region (66) and portions of the background viewing area (62) that are not overlapped by the foreground window (64) and displaying the foreground window (64) with an updated non-transparent interior region (68) that obscures any part of the background viewing area (62) overlapped thereby.

11. The device of claim 9 or claim 10, **characterized in that** the user interface manager (130) is configured for updating the user interface (60C) to display changes to the background viewing area (62) by updating and displaying the background viewing area (62) not overlapped by the foreground window (64), displaying a non-updated copy of the non-transparent interior region (68), and displaying the semi-transparent border region (66) updated so that background viewing area content (74) of the updated background viewing area (62) overlapped thereby can be at least partially viewed.

12. The device of any one of claims 9 to 11 **characterized in that** the user interface manager (130) is configured to, prior to the displaying the foreground window with the non-transparent region and the semi-transparent region:
determine if the foreground window (64) is to be displayed without any transparent regions, and if so, instead of displaying the foreground window (64) with the non-transparent region (68) and the semi-transparent region (66), display the foreground window (64) in its entirety as a non-transparent region that obscures any part of the background viewing area (62) overlapped thereby; and/or
determine if the foreground window (64) is to be displayed with both semi-transparent interior and border regions, and if so, instead of displaying the foreground window (66) with the non-transparent interior region and the semi-transparent border region, display the foreground window with both semi-transparent interior and border regions.

13. A computer program product having a computer-readable medium tangibly embodying computer executable instructions for implementing the method of any of claims 1 to 7.

14. The computer program product claimed in claim 13, **characterized in that** the non-transparent region (68) is an interior region of the foreground viewing area and the semi-transparent region (66) is a border region that surrounds the interior region.

15. The computer program product of claim 13 or claim 14, **characterized in that** the computer program product is embodied on a computer-readable medium of the mobile electronic device of any of claims 8 to 12.

## Amended claims

### Amended claims in accordance with Rule 86(2) EPC.

**1.** A method for displaying, in a graphical user interface having overlapping viewing areas, a foreground viewing area (64) having foreground viewing area content (70) over a background viewing area (62) having background viewing area content (74), the method comprising:
displaying the foreground viewing area (64) with a non-transparent region (68) that obscures any part of the background viewing area (62) overlapped thereby and a semi-transparent region (66) through which background viewing area content (74) overlapped thereby can be at least partially viewed;
updating the user interface (60C) to display changes to the foreground viewing area (64) by repainting only the non-transparent region (68) and not repainting the background viewing area (62) and the semi-transparent region (66).

**2.** The method claimed in claim 1, wherein the non-transparent region is an interior region (68) of the foreground viewing area (64) and the semi-transparent region is a border region (66) that surrounds the interior region (68).

**3.** The method claimed in claim 2, wherein the foreground viewing area (64) is a window.

**4.** The method claimed in claim 2 or claim 3, wherein a step of updating the user interface (60C) to display changes to the foreground viewing area (64) by copying and redisplaying the border region (66) and portions of the background viewing area (62) that are not overlapped by the foreground viewing area (64) and displaying the updated foreground viewing area (64) with an updated non-transparent interior region (68) that obscures any part of the background viewing area (62) overlapped thereby.

**5.** The method claimed in any one of claims 2 to 4, wherein a step of updating the user interface (60C) to display changes to the background viewing area (64) by displaying the updated background viewing area (62) not overlapped by the foreground viewing area (64), displaying a copy of the non-transparent interior region (68), and displaying the semi-transparent border region (66) updated so that background viewing area content (74) of the updated background viewing area (62) overlapped thereby can be at least partially viewed.

**6.** The method of any one of claims 2 to 5 wherein the displayed semi-transparent border region (66) comprises a blend of information from both the foreground viewing area (64) and the background viewing area (62).

**7.** The method of any one of claims 2 to 6 comprising, prior to the step of displaying the foreground viewing area (64) with the non-transparent region (68) and the semi-transparent region (66):
determining if the foreground viewing area (64) is to be displayed without any transparent regions, and if so, instead of displaying the foreground viewing area with the non-transparent region and the semi-transparent region, displaying the foreground viewing area (64) in its entirety as a non-transparent region that obscures any part of the background viewing area (62) overlapped thereby; and/or
determining if the foreground viewing area (64) is to be displayed with both semi-transparent interior and border regions, and if so, instead of displaying the foreground viewing area (64) with the non-transparent interior region and the semi-transparent border region, displaying the foreground viewing area (64) with both semi-transparent interior and border regions.

**8.** A mobile electronic device (10), comprising:
a display screen (22) for displaying a user interface having overlapping windows (62,64);
a memory (24,26);
a processor (38) connected to the memory (24,26) and to the display screen (22) for controlling operation of the display screen (22);
and wherein:
a user interface manager (130) associated with the processor (38) for displaying as part of the user interface (60C) a foreground window (64) having a non-transparent region (68) that obscures any part of a background viewing area (62) of the user interface (60C) overlapped by the non-transparent region (68); and a semi-transparent region (66) through which content (74) of the background viewing area (62) overlapped by the semi-transparent region (66) can be at least partially viewed;
and wherein the user interface manager (130) is configured for updating the user interface (60C) to display changes to the foreground window (64) by repainting only the non-transparent region (68) and not repainting the background viewing area (62) and the semi-transparent region (66).

**9.** The device claimed in claim 8, **characterized in that** the non-transparent region is an interior region (68) of the foreground window (64) and the semi-transparent region is a border region (66) of the foreground window (64).

**10.** The device of claim 9, **characterized in that** the user interface manager (130) is configured for updating the user interface (60C) to display changes to the foreground window (64) by reusing the border region (66) and portions of the background viewing area (62) that are not overlapped by the foreground window (64) and displaying the foreground window (64) with an updated non-transparent interior region (68) that obscures any part of the background viewing area (62) overlapped thereby.

**11.** The device of claim 9 or claim 10, wherein the user interface manager (130) is configured for updating the user interface (60C) to display changes to the background viewing area (62) by updating and displaying the background viewing area (62) not overlapped by the foreground window (64), displaying a non-updated copy of the non-transparent interior region (68), and displaying the semi-transparent border region (66) updated so that background viewing area content (74) of the updated background viewing area (62) overlapped thereby can be at least partially viewed.

**12.** The device of any one of claims 9 to 11 wherein the user interface manager (130) is configured to, prior to the displaying the foreground window with the non-transparent region and the semi-transparent region:
determine if the foreground window (64) is to be displayed without any transparent regions, and if so, instead of displaying the foreground window (64) with the non-transparent region (68) and the semi-transparent region (66), display the foreground window (64) in its entirety as a non-transparent region that obscures any part of the background viewing area (62) overlapped thereby; and/or
determine if the foreground window (64) is to be displayed with both semi-transparent interior and border regions, and if so, instead of displaying the foreground window (66) with the non-transparent interior region and the semi-transparent border region, display the foreground window with both semi-transparent interior and border regions.

**13.** A computer program product having a computer-readable medium comprising computer executable instructions for implementing the method of any of claims 1 to 7.

**14.** The computer program product claimed in claim 13, wherein the non-transparent region (68) is an interior region of the foreground viewing area and the semi-transparent region (66) is a border region that surrounds the interior region.

**15.** The computer program product of claim 13 or claim 14, wherein the computer program product is embodied on a computer-readable medium of the mobile electronic device of any of claims 8 to 12.
